(19) Europäisches Patentamt
European Patent Office
Office européen des brevets

(11) **EP 2 270 359 A1**

(12) **EUROPEAN PATENT APPLICATION**

(43) Date of publication:
**05.01.2011 Bulletin 2011/01**

(51) Int Cl.:
**F16H 1/32** (2006.01)

(21) Application number: **09172700.8**

(22) Date of filing: **09.10.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **30.06.2009 IT MI20091163**

(71) Applicant: **CAEB International S.r.l.**
**20121 Milano (IT)**

(72) Inventor: **Rota, Guido**
**24010 Sorisole BG (IT)**

(74) Representative: **Simino, Massimo et al**
**Cuccia & Simino S.r.l.**
**Corso di Porta Romana, 23**
**20122 Milano (IT)**

(54) **Mechanical reducer**

(57) A mechanical reducer comprises a body (2) supported in rotation with respect to which are an input shaft (3) and an output shaft (4) cinematically coupled to each other through mechanical transmission means. The mechanical transmission means have a first inner gear comprising a first gearwheel (5) with outer toothing coupled so as to be intermeshed with a second gearwheel (6) with inner toothing. Advantageously, the first gearwheel (5) is supported by an eccentric portion (3a) having preset eccentricity ($E_1$) of the input shaft (3) so as to rotate idly. The pitch line diameter ($D_{p2}$) of the second gearwheel (6) being equal to the pitch line diameter ($D_{p1}$) of the first gearwheel (5) increased by twice the value of the above-mentioned eccentricity ($E_1$).

Fig. 2

**Description**

The present invention refers to a mechanical reducer according to the preamble of claim 1.

In the mechanical industry, use of reducers, particularly mechanical gear reducers, is widely known and commonly used for various industrial applications, for example in the farming machinery or mechanical transmission sector in general. In particular, it is highlighted how the use of planetary gear reducers are currently much more preferable with respect to other types of mechanical reducers, for example parallel axes mechanical reducers, whenever there arises the need to obtain high reduction ratios and/or ensure high torque transmissions between the input shaft and output shaft, as in those cases when high loads are required to be supported on the output shaft.

The advantage of using planetary gear reducers with respect to other types of mechanical reducers derives from the specific structure of such reducers and from their related operating mode: three or more gears, called satellites are mounted on a satellite holder member, called train housing or planetary, and rotate around a central pinion, called solar pinion. Furthermore, the rotation axis of the planetary coincides with the rotation axis of the solar pinion and the whole assembly is arranged inside a gearwheel with inner toothing, usually referred to as crown gear.

It should be observed that an element selected from among the planetary, the solar pinion and the crown gear is maintained fixed, while the other two respectively represent the input and output of the motion into/from the reducer. Usually, should it be desirable to obtain a reduction of the rotation of the output shaft with respect to the input shaft it is advantageous to keep the crown gear fixed and couple the input shaft and the output shaft respectively to the solar pinion and to the planetary, in such a manner that the planetary rotates at a lower speed with respect to the solar pinion.

Regarding the currently known planetary gear reducers it should be observed that though advantageous, the same reveal some drawbacks from different points of view, such drawbacks hindering a more widespread application thereof. Accordingly, it should be observed how, for example, in cases requiring a high torque transmission capacity and a simultaneous high reduction ratio, in order to avoid mechanical yielding or excessive wear of the various components, the planetary gear reducers may reach dimensions which make them quite cumbersome.

Furthermore, it is observed how the need to provide for a plurality of rotating parts engaged to each other such as the planetary, the solar pinion and above all the satellites, the latter being three or more, necessarily implies the presence and operation of a high number of components, most of which provided with toothing, as well as having to suitably support a high number of such components in rotation.

Thus, the problem on which the present invention is focused, is that of providing a mechanical reducer having structural and functional characteristics such to attain the advantages derived from the use of a planetary gear reducer and which, simultaneously, is capable of overcoming the abovementioned drawbacks with respect to the planetary gear reducers of the prior art.

Such problem is solved by a mechanical reducer according to claim 1.

Further characteristics and advantages of the mechanical reducer according to the present invention shall be clear from the following description of some preferred embodiments thereof, provided for exemplifying and non-limiting purposes, with reference to the attached figures, wherein:

- figure 1 represents an exploded simplified perspective view of a mechanical reducer according to the invention;
- figure 2 represents a partially sectioned perspective view of the mechanical reducer of figure 1 according to the invention;

- figure 3 represents a longitudinal section view of the mechanical reducer of figure 1;

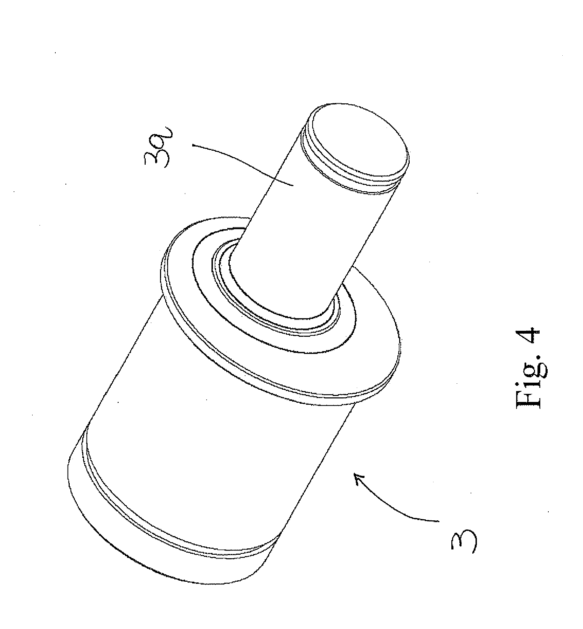

- figures 4, 5 and 6 represent respective perspective views of various components of the mechanical reducer of figure 1;

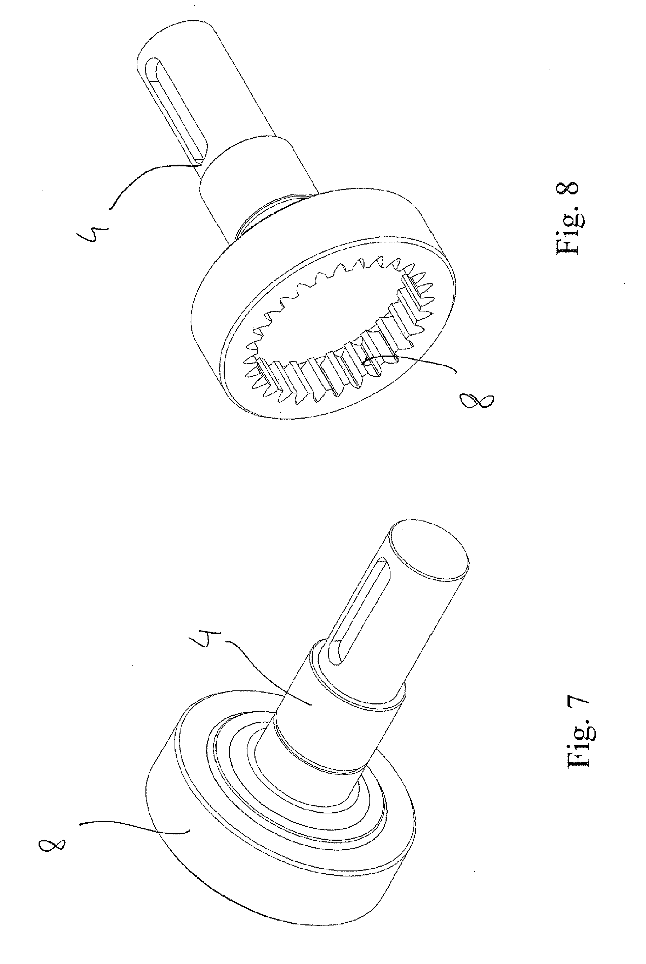

- figures 7 and 8 represent perspective views according to two different perspectives of a further component of the mechanical reducer of figure 1 and
- figures 9 to 12 represent transverse sectional views of the mechanical reducer of figure 1 at four different successive operating steps obtained by rotating the angular position of the eccentric by 90°.

Referring to the attached figures, a mechanical reducer according to the invention is indicated in its entirety with 1.

The mechanical reducer 1 comprises a body 2, having a substantially cylindrical shape with circular section, and two rotating parts, respectively indicated with 3 and 4, supported in such a manner to be able to rotate around a preset rotation axis X-X with respect to the body 2. Such rotating parts identify input points or, respectively, motion entry or exit points into/from said mechanical reducer.

According to the illustrated embodiment, the abovementioned rotating parts 3 and 4 are represented by a motion input shaft 3 and a motion output shaft 4, also referred to as motion take-off shaft, which are extended aligned with respect to each other along a common rotation axis X-X. Regarding this, it is clear how, alternatively to the description above, use of intermediate shafts or elements such as a bevel gear and the like allows obtaining a mechanical reducer wherein the input shaft and the output shaft are not aligned and/or parallel to each other.

In this description, the term "input shaft" of the reducer is used to indicate the shaft, i.e. the rotating part, intended to receive the input driving torque in the reducer, while the term "output shaft" or take-off shaft is used to indicate the shaft, i.e. the rotating part, which is intended to provide the output driving torque from the reducer. When using the device as a reducer of the rate of revolutions, the input shaft rotates faster with respect to the output shaft. Obviously, using the mechanical device in the opposite manner, i.e. to increase the output revolutions with respect to the input revolutions, the input shaft and output shaft are inverted.

The input shaft 3 is supported in rotation with respect to the body 2 by interposing bearings 11.

Accordingly, the output shaft 4 is supported in rotation with respect to the body 2 by interposing bearings 12.

The abovementioned rotating parts of the reducer device 1, i.e. the input shaft 3 and the output shaft 4, are kinetically coupled to each other by means of mechanical gear transmission means, i.e. capable of ensuring transmission of the motion and torque between toothed elements gear-coupled to each other.

In particular, the abovementioned mechanical gear transmission means comprise a first inner gear wherein a first gearwheel 5, provided with outer toothing, is coupled so as to be intermeshed with a second gearwheel 6, provided with inner toothing, in order to transfer the driving torque from the input shaft 3 to the output shaft 4.

Referring to the abovementioned first inner gear it should be observed that:

- the input shaft 3 has an eccentric end portion 3a, which projects parallel to the rotation axis X-X with a preset eccentricity value $E_1$;
- the first gearwheel 5 is supported idly in rotation, by interposing roller bearings 9, by the abovementioned eccentric portion 3a of the first shaft 3, in such a manner that the rotation axis Y-Y of the first gearwheel 5 has a first eccentricity $E_1$ with respect to the rotation axis X-X of the input shaft 3;
- the pitch line diameter $D_{p1}$ of the first gearwheel 5 is greater than half the value of the pitch line diameter $D_{p2}$ of the second gearwheel 6, thus corresponding to the following relation:

$$D_{p1} > D_{p2}/2,$$

- the pitch line diameter $D_{p2}$ of said second gearwheel 6 is substantially equivalent to the pitch line diameter $D_{p1}$ of said first gearwheel 5 increased by twice the value of said first eccentricity $E_1$, thus satisfying the following relationship:

$$D_{p2} > D_{p1} + 2*E_1.$$

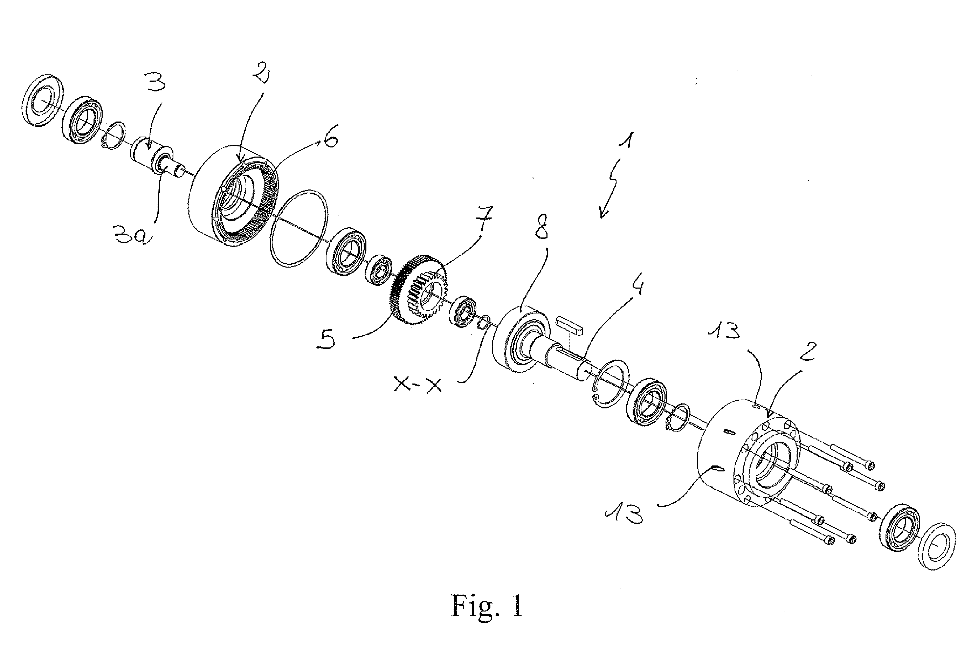

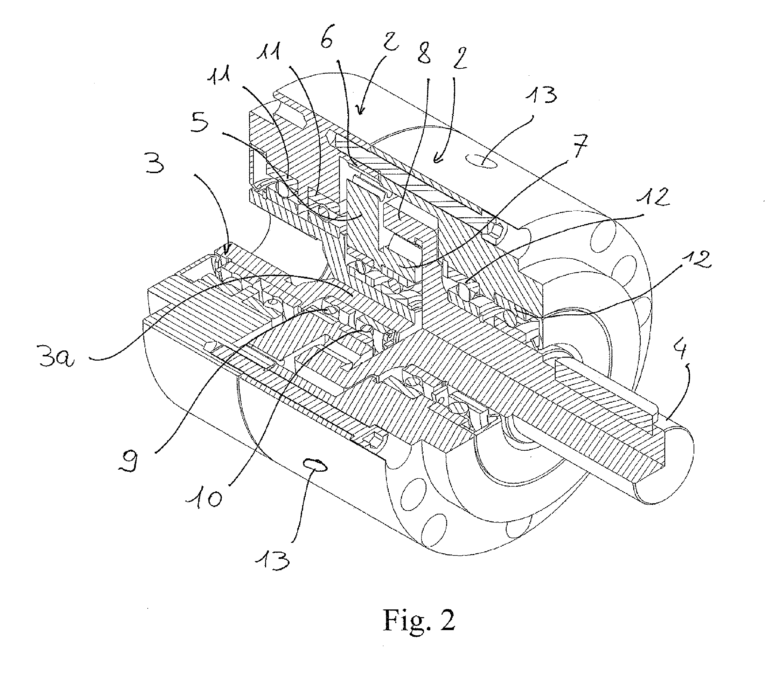

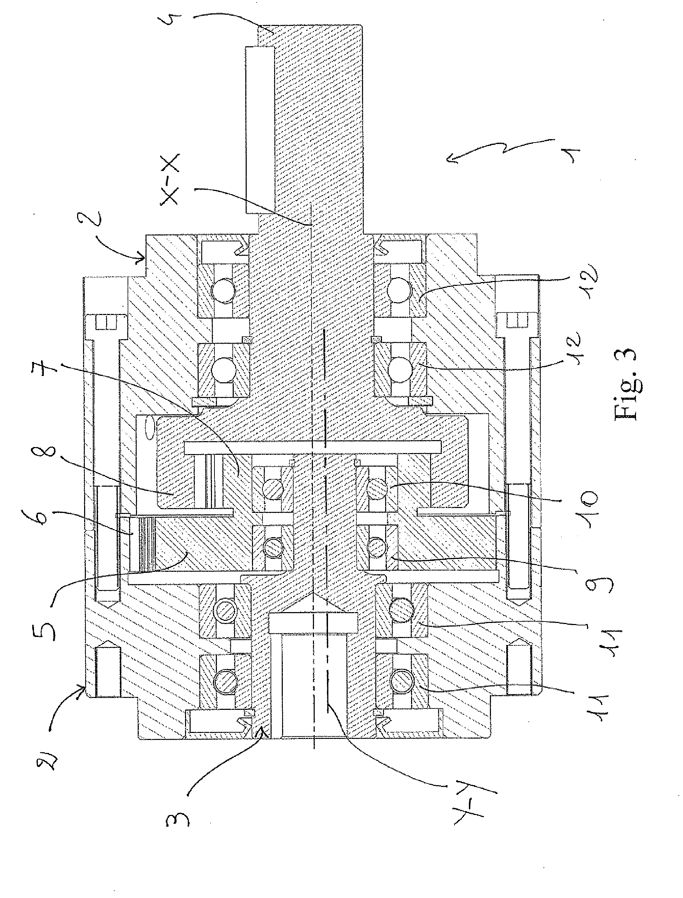

According to the embodiment illustrated in figures 1 to 3:

- the second gearwheel 6 is integrally fixed to the body 2 while
- the first gearwheel 5 is cinematically coupled in rotation with the abovementioned second rotating part, i.e. the shaft 4, by means of gear-coupling, i.e. such as toothed coupling.

In order to transfer the driving torque from the input shaft 3 to the output shaft 4, the abovementioned mechanical transmission means preferably comprise a second internal gear, wherein a third gearwheel 7, provided with outer toothing, is coupled so as to be intermeshed with a fourth gearwheel 8, provided with inner toothing.

Referring to such second inner gear it should be observed that:

- the pitch line diameter $D_{p3}$ of said third gearwheel is greater than half the pitch line diameter $D_{p4}$ of said fourth gearwheel, thus satisfying the following relationship:

$$D_{p4} > D_{p3}/2,;$$

- the rotation axis Y-Y of the third gearwheel 7 has a second eccentricity $E_2$ with respect to the rotation axis X-X of the fourth gearwheel 8;
- the pitch line diameter $D_{p4}$ of the fourth gearwheel 8 is substantially identical to the pitch line diameter $D_{p3}$ of the third gearwheel 7 increased by twice the value of the second eccentricity $E_2$, thus satisfying the following relationship:

$$D_{p4} > D_{p2} + 2*E_2.$$

It should be observed that an element selected between the third gearwheel 7 and the fourth gearwheel 8 is coupled in rotation with the first gearwheel 5, while the remaining element between the third gearwheel 7 and the fourth gearwheel 8 is coupled in rotation with the second rotating part.

According to the embodiment of figures 1 to 3, the third gearwheel 7 is coupled in rotation with the first gearwheel 5 while the fourth gearwheel 8 is coupled in rotation with the second rotating part 4. For such purpose, the third gearwheel 7 is supported rotationally idle, by interposing roller bearings 10, by the abovementioned eccentric portion 3a of the first shaft 3, in such a manner that the rotation axis Y-Y of the third gearwheel 5 has a second eccentricity $E_2$ with respect to the rotation axis X-X of the input shaft 3 and output shaft 4, the value of the first eccentricity $E_1$ being conveniently equivalent to the value of the second eccentricity $E_2$.

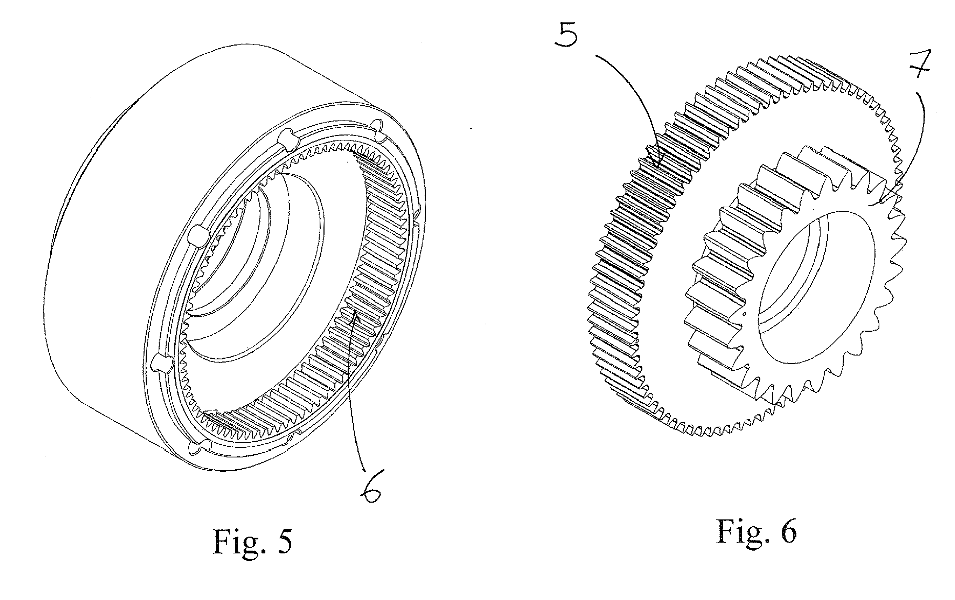

Thus, in the embodiment of figures 1 to 3, the first gearwheel 5 and the third gearwheel 7 are integrally coupled to each other in rotation in such a manner to have the same rotation axis Y-Y. Preferably, gearwheels 5 and 7 are made in a single piece to form one gearwheel provided with two outer crown gears adjacent and parallel to each other, as illustrated in figure 6, having respective pitch line diameters $D_{p1}$ and $D_{p3}$ and a different respective number of teeth.

Considering the abovementioned structural characteristics of the mechanical reducer 1 illustrated in figures 1 to 3, in a specific use application (not illustrated) such reducer may be conveniently mounted in an apparatus in such a manner to have: the body 2 fixed with respect to the support structure of the apparatus itself. Furthermore, the input shaft 3 and output shaft 4 project from the body 2 of the mechanical reducer 1 and they are firmly coupled in rotation respectively to a driving shaft (not illustrated) and to a driven shaft (not illustrated) of the apparatus. As observable from the figures, the input shaft 3 is obtained in such a manner to have a hollow cylindrical end portion which provides a seat for receiving a corresponding end portion of a driving shaft.

The rotation of the input shaft 3 around the axis X-X determines a corresponding eccentric rotation of the eccentric portion 3a of the shaft 3 and of the first gearwheel 5.

Considering the fact that:

- the first gearwheel 5 is mounted idle on the eccentric portion 3 a of the input shaft 3,
- the first gearwheel 3 has a coupling engagement, i.e. by means of gear coupling, with the second gearwheel 6 and
- the second gearwheel 6 is fixed with respect to the body 2 of the reducer 1,
  the abovementioned rotation of the shaft 3 determines a planetary movement of the first gearwheel 5 around the inner crown gear of the second gearwheel 6.

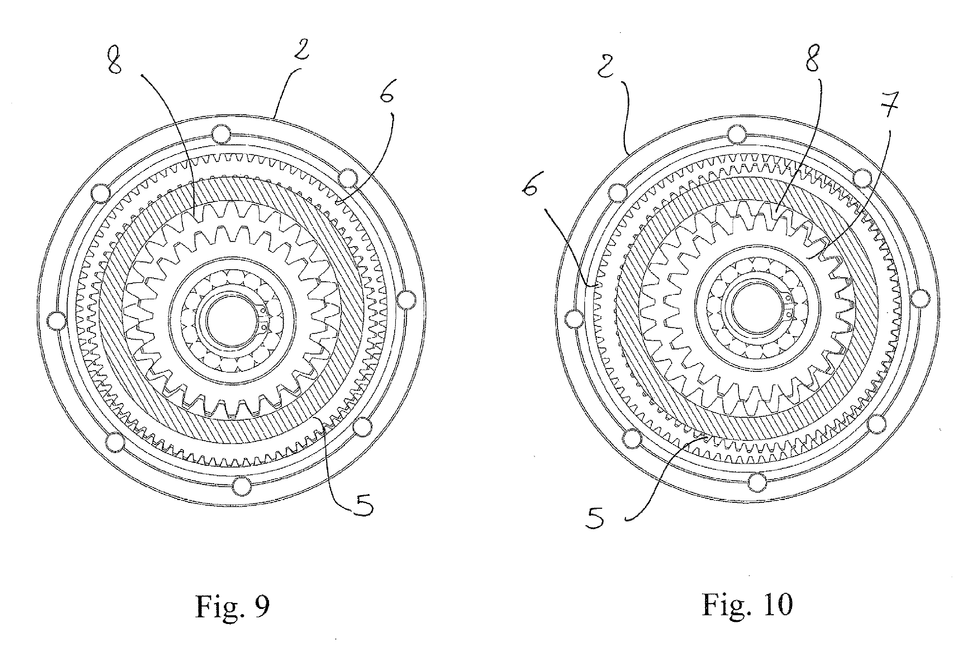

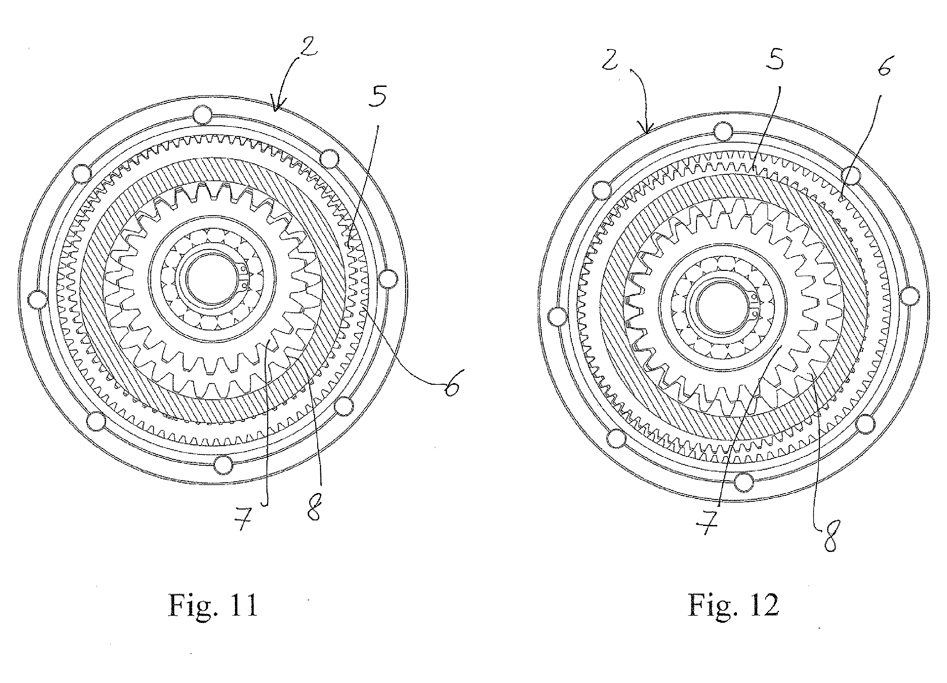

Illustrated in figures 9 to 12 are four respective different angular positions, rotated by 90° one from the other, acquired by the first gearwheel 5 with respect to the second gearwheel 6.

The ratio between the number of revolutions of the input shaft 3 and the number of revolutions of the first gearwheel 5 in the abovementioned planetary movement around the second gearwheel 6 also depends on the pitch line diameter and the number of teeth of the first gearwheel 5 and of the second gearwheel 6 as well as from the value of the abovementioned eccentricity $E_1$.

Considering the fact that the first gearwheel 5 and the third gearwheel 7 are integrally coupled to each other in rotation around the common rotation axis Y-Y, the abovementioned planetary rotation of the first gearwheel 5 determines a corresponding planetary rotation of the third gearwheel 7 with respect to the fourth gearwheel 8. Substantially, gearwheel 7 rotates around axis Y-Y and a corresponding revolution rotation around axis X-X of the third gearwheel 7.

Illustrated in figures 9 to 12 are four respective different angular positions, mutually rotated by 90°, acquired by the third gearwheel 7 with respect to the fourth gearwheel 8.

Considering the fact that the third gearwheel 7 is gear-coupled, i.e. by toothed coupling with the fourth gearwheel 8 and that the fourth gearwheel 8, is in turn firmly coupled in rotation to the output shaft 4, the abovementioned planetary rotation of the third gearwheel 7 determines a corresponding rotation of the output shaft 4 around its axis X-X. Also in this case, the ratio between the number of rotations of the third gearwheel 7 and the output shaft 4 in the abovementioned planetary movement of the second internal gear not only also depends on the pitch line diameter and on the number of teeth of the third gearwheel 7 and of the fourth gearwheel 8 but also on the value of the abovementioned second eccentricity $E_2$ which, in the preferred embodiment considered herein, is equivalent to the first eccentricity $E_1$.

From the information outlined above, it is clear that the presence of the first inner gear, the second inner gear and the eccentricity $E_1 = E_2$ between the rotation axis X-X of the input shaft 3 and the axis Y-Y of the eccentric portion 3a, supported rotationally idle on which are both the first gearwheel 5 and the third gearwheel 7, it is possible to obtain high reduction ratios of the number of revolution of the output shaft 4 with respect to the input shaft 3.

Advantageously, the first gearwheel 5 and the third gearwheel 7 have different pitch line diameters $D_{P1}$, $D_{P3}$ and/or a respective different number of teeth.

Alternatively to the information outlined above, according to an embodiment not illustrated, the third gearwheel 7 may be obtained as a gearwheel with inner toothing and, simultaneously, the fourth gearwheel 8 may be obtained as a gearwheel with outer toothing. Substantially, the gearwheel 7 with outer toothing may be made integral with the output shaft 4 in rotation around the rotation axis X-X, while the gearwheel 8 with inner toothing may be supported idle in rotation on the eccentric portion 3a of the shaft 3.

According to a different method for mounting and using the mechanical reducer according to the invention, the same may be mounted in such manner to have the shaft 4 maintained fixed with respect to the support structure of the apparatus leaving to the second gearwheel 6 the possibility to rotate around axis X-X to transfer, directly or indirectly, the rotation motion to the second rotating part. To obtain this, without excessively modifying the structure of the mechanical reducer 1 it is enough to consider the entire body 2 as the second rotating part. Thus, in this specific mounting and operation condition, the mechanical reducer 1 is supported through the shaft 4 by the structure of the apparatus in which it is mounted, the body 2 being coupled directly to the driven shaft of the abovementioned apparatus, for example by means of flanging or other coupling means, or indirectly, for example through idlers or gears.

In order to ensure correct and efficient operation of the mechanical reducer 1 over time, it is preferable that the first inner gear, formed by the first gearwheel 5 and second gearwheel 6, and the second inner gear, formed by the third gearwheel 7 and fourth gearwheel 8, be protected against dust, dirt and/or other external elements and the gears. Accordingly, it is also advisable that such elements rotate in an oil bath.

In order to meet such needs, the body 2 is configured in such a manner to obtain a closed chamber wherein the first inner gear and the second inner gear are received in the oil bath, providing for suitable sealing gaskets and closure around the rotating parts, in particular the input shaft 3 and the output shaft 4, in such a manner to prevent or reduce oil leakage from such chamber to the maximum.

Regarding the specific configuration of the mechanical reducer 1, it should be observed that the dimension of the first gearwheel 5 with respect to the dimension of the second gearwheel 6, just like the dimension of the third gearwheel 7 with respect to the dimension of the fourth gearwheel 8, is such that both the first gearwheel 5 and the third gearwheel 7, operating in an oil bath, may be hindered in their movement by the fluid resistance which, during rotation, must be moved from one side to the other of the chamber. Obviously such effect is undesired in that it reduces the mechanical efficiency of the geared motor and it can be easily solved or curbed by providing for - in the lateral walls of the abovementioned chamber - at least two transfer ports 13 mutually hydraulically connected by means of a by-pass pipe, taking care to provide the abovementioned transfer ports 13 offset angularly to each other with respect to the rotation axis X-X.

Preferably, the transfer ports 13 are obtained on the lateral wall of the body 2 substantially at the height of or in proximity to the inner gears, while the by-pass pipe (not illustrated) may be identified by a connection pipe outside the body 2. Alternatively, the external connection pipe capable of putting even more than two of the abovementioned transfer ports 13 in fluid communication, may lead to an annular chamber, positioned outside or in the thickness of the body 2, in communication with the transfer ports.

Preferably, it is advantageous to have a plurality of transfer ports 13 spaced circumferentially with respect to each other, for example by a 30° angle from each other.

As observable from the description above, the mechanical reducer according to the invention allows meeting the abovementioned needs and it simultaneously overcomes the drawbacks referred to at the introduction of the present description.

As a matter of fact, the particular structure of the mechanical reducer according to the invention, considering a structure having extremely compact dimensions and formed by a relatively small number of rotating parts, allows obtaining high reduction ratios between the input shaft and the output shaft, simultaneously providing for the possibility of transmitting extremely high torques without jeopardizing the structural integrity of the mechanical reducer.

Regarding the high reduction ratio attainable with the reducer subject of the present invention, it is observable how it is a direct consequence of the fact that such reduction ratio not only depends on the pitch line diameter and the number of teeth of the gearwheels of each inner gear but also on the eccentricity value of the eccentric portion of the input shaft on which the first and the third gearwheel are supported idle in rotation.

Furthermore, it is clear that the structural solidity of the structure of the mechanical reducer according to the invention with respect to a normal planetary gear reducer, lies in having eliminated the presence of satellites which, considering the same transmittable torque, not only increase the overall dimensions of the reducer but also determine the presence of a larger number of rotating parts to be supported correctly in rotation, use in a larger number of bearings to be employed and a bottleneck regarding the possibility of transmitting high torques without excessively increasing its diameter and the diameter of the reducer itself.

An advantage of the mechanical reducer according to the invention lies in the simplicity of the structural solution used which ensures proper operation thereof without requiring demanding maintenance operations.

Obviously, with the aim of meeting required and specific needs, a man skilled in the art may subject the mechanical reducer described above to numerous modifications and variants, all falling within the scope of protection of the invention as defined by the following claims.

Thus, for example, as an alternative to the description outlined above, the following may be provided for.

## Claims

1.   Mechanical reducer comprising a body (2) and two parts rotating with respect to said body (2) around a respective predetermined rotation axis (X-X), said two rotating parts defining motion entry or exit points into/from said mechanical reducer, wherein:

- said two rotating parts are kinematically coupled together through mechanical transmission means comprising a first inner gear comprising a first gearwheel (5) with outer toothing coupled so as to be intermeshed with a second gearwheel (6) with inner toothing,

**characterised in that**:

- said first gearwheel (5) is supported so as to rotate idly by an eccentric portion (3a) of said first rotating part (3), the rotation axis (Y-Y) of said first gearwheel (5) having a first eccentricity ($E_1$) with respect to the rotation axis (X-X) of said first rotating part (3);

- the pitch line diameter ($D_{p1}$) of said first gearwheel (5) is greater than half the pitch line diameter ($D_{p2}$) of the second gearwheel (6),

- the pitch line diameter ($D_{p2}$) of said second gearwheel (6) is substantially equal to the pitch line diameter ($D_{p1}$) of said first gearwheel (5) increased by twice the value of said first eccentricity ($E_1$).

2. Mechanical reducer according to claim 1, wherein:

said first gearwheel (5) is kinematically connected in rotation with said second rotating part (4) through intermeshing engagement and

- said second gearwheel (6) is fixed to said body (2).

3. Mechanical reducer according to claim 2, wherein said mechanical transmission means comprise a second inner gear comprising a third gearwheel (7) with outer toothing coupled so as to be intermeshed with a fourth gearwheel (8) with inner toothing, in which:

- the pitch line diameter ($D_{p3}$) of said third gearwheel (7) is greater than half the pitch line diameter ($D_{p4}$) of said fourth gearwheel (8),

- the rotation axis of said third gearwheel (7) has a second eccentricity (E2) with respect to the rotation axis of said fourth gearwheel (8);

- the pitch line diameter ($D_{p3}$) of said fourth gearwheel (8) is substantially equal to the pitch line diameter ($D_{p3}$) of said third gearwheel (7) increased by twice the value of said second eccentricity ($E_2$) and

- one element selected from said third gearwheel (7) and said fourth gearwheel (8) being connected in rotation with said first gearwheel (5), the remaining element from said third gearwheel (7) and said fourth gearwheel being connected in rotation with said second rotating part (4).

4. Mechanical reducer according to claim 3, wherein said third gearwheel (7) is supported so as to rotate idly by said eccentric portion (3a) of said first rotating part (3).

5. Mechanical reducer according to any one of claims 1 to 4, wherein:

- said second gearwheel (6) is connected in rotation with said second rotating part (2) and

- said first gearwheel (5) is kinematically connected through intermeshing engagement to a fixed part (4), so as to be able to rotate with respect to it.

6. Mechanical reducer according to claim 5, wherein said mechanical transmission means comprise a second inner gear comprising a third gearwheel (7) with outer toothing coupled so as to be intermeshed with a fourth gearwheel (8) with inner toothing, in which:

- the pitch line diameter ($D_{p3}$) of said third gearwheel (7) is greater than half the pitch line diameter ($D_{p4}$) of said fourth gearwheel (8),

- the rotation axis of said third gearwheel (7) has a second eccentricity (E2) with respect to the rotation axis of said fourth gearwheel (8);

- the pitch line diameter ($D_{p3}$) of said fourth gearwheel (8) is substantially equal to the pitch line diameter ($D_{p3}$) of said third gearwheel (7) increased by twice the value of said second eccentricity ($E_2$) and

- one element selected from said third gearwheel (7) and said fourth gearwheel (8) is connected in rotation with said first gearwheel (5), the remaining element from said third gearwheel (7) and said fourth gearwheel being kinematically connected through intermeshing engagement with said fixed part (4), so as to be able to rotate with respect to it.

7. Mechanical reducer according to any one of claims 1 to 6, wherein:

- said first eccentricity ($E_1$) and said second eccentricity ($E_2$) are the same as one another;

- the rotation axis of said first rotating part (3) is aligned with the rotation axis of said second rotating part (4; 2).

8. Mechanical reducer according to claim 3 or 6, wherein said first gearwheel (5) and said third gearwheel (7) are fixedly connected together in rotation so as to have the same rotation axis (Y-Y).

9. Mechanical reducer according to claim 8, wherein said first gearwheel (5) and said third gearwheel (7) have different pitch line diameters ($D_{p1}$, $D_{p3}$) and or numbers of teeth to one another.

10. Mechanical reducer according to claim 1, 3 or 6, wherein said body (2) defines a chamber in which said inner gear is received in an oil bath, the walls

**EP 2 270 359 A1**

of said chamber comprising at least two drainage ports (13) in fluid connection with one another through a by-pass duct, said drainage openings (13) being positioned substantially at said inner gear and angularly staggered apart with respect to the rotation axis (X-X) of said first rotating part (3).

Fig. 1

Fig. 2

Fig. 3

Fig. 4

Fig. 5

Fig. 6

EP 2 270 359 A1

Fig. 8

Fig. 7

Fig. 10

Fig. 9

Fig. 12

Fig. 11

**EUROPEAN SEARCH REPORT**

Application Number

EP 09 17 2700

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2005 056991 A1 (JAKOB REINER [DE]) 31 May 2007 (2007-05-31) * paragraphs [0005], [0006]; figure 1 * ----- | 1-10 | INV. F16H1/32 |
| X | US 4 014 224 A (PITTS DALLAS L) 29 March 1977 (1977-03-29) * figures 1-3 * * column 3, lines 32-34 * ----- | 1-10 | |

TECHNICAL FIELDS SEARCHED (IPC)

F16H

The present search report has been drawn up for all claims

| Place of search | Date of completion of the search | Examiner |
|---|---|---|
| Munich | 8 January 2010 | Meritano, Luciano |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

  .......................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 09 17 2700

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2010

| Patent document cited in search report | Publication date | Patent family member(s) | Publication date |
|---|---|---|---|
| DE 102005056991 A1 | 31-05-2007 | NONE | |
| US 4014224 A | 29-03-1977 | NONE | |

EPO FORM P0459